# EUROPEAN PATENT APPLICATION

(11) **EP 2 037 671 A1**
(43) Date of publication of application: **18.03.2009**
(21) Application number: 07301353.4
(22) Date of filing: 11.09.2007
(51) Int. Cl.: H04N 5/272, H04N 5/265

(54) **Video processing apparatus and method for mixing a plurality of input frames on a pixel-by-pixel basis**

(71) Applicant: Thomson Licensing, 92100 Boulogne-Billancourt (FR)
(72) Inventor: Shauchenka, Aliaksei, 64285, Darmstadt (DE)
(74) Representative: Lindemann, Robert

(57) **Abstract**

In the field of video processing for example of live video images or sequences of live video images it is often necessary to combine a plurality of input images to an output image, whereby the output pixels of the output image are the result of mixing selected input pixels of the input images.

An apparatus 1 for video processing is prposed, wherein a plurality of input frames 3 a, b with input pixels is combined to an output frame (4) with output pixels, wherein the plurality of input frames 3 a, b comprises at least one video image, the apparatus 1 comprising: a selecting module 8, 12 for selecting regions of the input frames 3 a, b with input pixels as selected regions 5 a, b to be combined to the output frame 4, wherein at least one, some or each selected region 5 a, b represents a subset of its input frame 3 a, b, a processing module 9, 10, 13 arranged for processing at least a subset of the input pixels thereby generating processed pixels, a combining module 18 for combining the processed pixels to the output frame 4 whereby the processing module 8, 12 is arranged for processing only the input pixels of the selected regions 5a,b and for processing the input pixels of at least two different input frames 3a,b in a serial order.

## Description

The invention relates to a video processing apparatus and a method for mixing a plurality of input frames on a pixel-by-pixel basis and, more specifically, relates to an apparatus for video processing, wherein a plurality of input frames with input pixels is mixed to an output frame with output pixels, wherein the plurality of input frames comprises at least one video image, the apparatus comprising a selecting module for selecting regions of the input frames with input pixels as selected regions to be mixed to the output frame, wherein at least one, some or each selected region represents a subset of its input frame, a processing module arranged for processing at least a subset of the input pixels thereby generating processed pixels, a mixing module for mixing the processed pixels to the output frame and a respective method.

In the field of video processing for example of live video images or sequences of live video images it is often necessary to combine a plurality of input images to an output image, whereby the output pixels of the output image are the result of mixing selected input pixels of the input images. Conventional video mixing, which is a core task of production mixers in video processing, usually requires multiple layer instances working in parallel for processing the plurality of input images. A layer corresponds to a video signal which is more or less visible in the output signal after mixing. Usually each layer or each video image corresponding to the layer is processed by digital video processing in its entirety and an output mixer selects the pixels of the processed video images, which are relevant for the output image, and combines or mixes the selected pixels to the output image. However, this approach appears not to be optimized with regard to resources and power consumption.

A known solution for reducing hardware resources needed is time division multiplexing, i.e. running a single layer hardware instance at very high speed such that all input video signals can be processed by the single hardware. But this approach requires the single hardware to run at a multiple pixel frequency, which also has several limitations in view of the processing speed of the hardware as known in the state of the art. Further, running hardware at very high speed could cause high power consumption and heat problems, as well as timing problems for the signals.

The document EP 1 401 203 A1 discloses a method of realizing a combination of multi-sets of multiple digital images and a respective bus interface technique. The hardware architecture provides a plurality of parallel input channels for receiving video images. In each input channel a processing unit is provided to generate sub-images of the received video images, whereby the processing units are working in parallel. The pixel data of the generated sub-images are selectively switched to video data busses and combined into an output image.

The document US 2005/0195187 discloses a method and apparatus for hierarchical Z-buffering and stenciling in the field of graphics rendering, whereby an input tile Z value range is compared with a hierarchical Z value range and a stencil code. In determining whether to render the tile, a stencil test and a hierarchical Z value test is performed. If one of the tests fails, the tile is killed as it is determined that the pixels are not visible in the graphical output. If the stencil test passes and the hierarchical Z test passes, the pixels within the tile are rendered, as it is determined that the pixels may be visible.

Although solutions for realizing apparatus for video processing, which are mixing a plurality of input frames to an output frame are known in the art, it is a general desire of further improving such an apparatus.

This object is achieved by an apparatus for video processing with the features of claim 1 and a method for mixing a plurality of input frames with the features of claim 13. Preferred embodiments of the invention are disclosed in the dependent claims, the description and the figures.

According to the invention an apparatus for video processing is proposed which is operable and/or arranged to mix a plurality of input frames with input pixels on a pixel-by-pixel basis to an output frame with output pixels. The plurality of input frames comprises at least one video image, for example a black and white or color image. The apparatus comprises preferably a plurality of interfaces for receiving the input frames from various frame sources like video cameras, video recorder and/or video storage units.

The apparatus comprises a selecting module arranged for selecting regions of the input frames with input pixels as selected regions to be mixed to the output frame, wherein at least one, some or each selected region represent a subset of its input frame. The selecting module may be realized as a combination of a frame store unit holding the plurality of input frame and a selecting unit for selectively extracting the selected regions and/or the input pixels of the selected regions from the frame store unit.

A processing module is arranged for processing, especially filtering, at least a subset of the input pixels or areas of pixels thereby generating processed pixels. Preferably the processing operation includes amending the pixel value of the input pixels.

Furthermore, a mixing module is provided for mixing the processed pixels to the output frame. The mixing of the processed pixels is preferably realized pixelwise, wherein the processed pixels are arranged side-by-side in the output frame and/or wherein processed pixels overlapping with each other in the output frame are mixed by a combining operation, for example during a cross-fading of frames and especially by calculating a common value for the respective pixel values.

According to the invention it is proposed that the processing module is arranged for processing only the input pixels of the selected regions and for processing the input pixels of at least two different input frames corresponding to a common output frame in a serial order.

One finding of the invention is that processing all input frame completely, i.e. with all input pixels, whether in a parallel operation or in a serial operation requires a plurality of hardware layers or a very fast central hardware layer. The proposed technique suggests to visit each output pixel, detect which input frames or layers of input frames participate in this output pixel and calculate pixels only from the detected input frames or layers. A plurality of possible or optional advantages results from the proposed apparatus: The hardware resources are minimized, so that the proposed apparatus is cost-effective. The power consumption of the apparatus is also minimized, as only a selection of the input pixels is processed. There are no limitations on the number of input frames or layer numbers and their combinations, as regardless of the number of the layers only input pixels are processed which participate in the output frame. Furthermore, graphic and character generators can be integrated in the apparatus providing input frames with graphic and/or character information, thus, the apparatus is more flexible for advanced video effects.

In a preferred embodiment the apparatus is arranged as a spatial multiplexing unit arranged for spatial multiplexing the input pixels, so that the selected pixels are combined into a single, serial input data stream.

In a further preferred embodiment each selected region comprises only one single input pixel. This embodiment underlines the idea of processing and/or mixing the input pixels on a pixel-by-pixel basis and is especially preferred in case the processing module is arranged for processing each input pixel separately and/or independently from other input pixels, for example from the adjacent input pixels.

It is furthermore preferred that the processing module and/or the selecting module is or are, respectively, arranged to process the input pixels corresponding to the output pixels of one of the output frames in a sequential order. This development allows that the processing module is realized as a single hardware layer, for example as a single data processing unit, which - on the one hand side - leads to less hardware resources in comparison to a processing in a parallel order and thus the need of a plurality of parallel hardware layer and - on the other hand side - allows to use a processing module with less processor performance or power or speed compared to a processing module which has to process all input pixels of all input frames in a sequential order, because only the input pixels which are needed for the output frames are processed. Thus it is preferred that the processing module is realized as a single hardware, which is responsible for all input pixels of the selected regions. However, in other embodiments more than one hardware layer or processing unit may be employed, whereby the number of hardware layers or processing units can be smaller than the number of the input frames to be processed to the output frame.

In a preferred implementation the processing module comprises means for one, for a subset or for all of the following tasks: Color processing and/or color correcting, chroma key generating, luma key generating and/or gamma correcting. However, the tasks may also comprise all processing operations, which are used for processing video images, especially live video images and/or video images being provided by a video camera or the like.

In a preferred development of the invention the apparatus comprises an output geometry description module which is arranged for receiving position data or equivalent data of one or at least one of the output pixels to be mixed and for detecting and/or returning layer data identifying the input frames comprising the selected regions for the respective output pixels and/or the position of the selected regions. Thus, the output geometry description module maps the position data of the output pixels to the respective input pixels of the input frames. The position data of the output pixel may be provided by a user or may be detected automatically.

In a preferred development the detecting of the input frames and/or of the layer data corresponding to the output pixel could be done using techniques from computer graphics called tile-based rendering, for example as explained in the prior art document US 2005/0195187 A1 which was referenced in the introductory portion. The disclosure of this document is incorporated herein by reference in its entirety.

In a further preferred embodiment of the invention the apparatus comprises a frame store module for holding the input frames, which are mixed to a single output frame, at least temporarily. The frame store module may optionally comprise the plurality of interfaces which are connectable to video cameras, video recorders or other video sources and which provides sequences of input images as input frames.

From a functional point of view the output geometry description modules returns layer and position data identifying the input frames comprising the selected regions for the respective output pixels and their position and retrieves the respective input pixels from the input frames from the frame store.

In yet a further preferred development the apparatus comprises a data distribution module which is arranged to provide the processing module with selective processing parameters in dependence on the position and/or on the layer data of the selected region and/or of the input pixels to be processed. This development underlies the idea that only input pixels needed for the output pixels of the output frame are processed and that the processing parameters for the processing operations are selectively provided in dependence on the input frame.

One finding of this development is that - for example - for each input frame a set of processing parameters is provided. While mixing the input frames to the output frame only selected input pixels are processed with processing parameters referring to the input frames of the input pixels. So as a result not only the input pixels are multiplexed but also the processing parameters are switched in dependence on the used layer or input frame.

In a further preferred development of the invention the plurality of the input frames comprises at least one graphic and/or character frame. One possible advantage of the invention is that the architecture allows treating graphic and/or character frames in an identical or analogous manner like the video images and that the number of input frames is not restricted by hardware layers. So it is for example possible to provide beside physical interfaces for connecting the apparatus with video cameras and the like, virtual interfaces for receiving graphic and/or character frames, which can be temporarily hold in the frame store unit.

In a preferred realization of the invention the apparatus is carried out as a video production mixer which works preferably in real-time or is adapted for live video production mixing. The delay between the input frame and the output frame is for example less than 5 frames, preferably less than 3 frames and especially less or equal to 2 frames.

A further object of the invention is a method for mixing a plurality of input frames with input pixels to an output frame with output pixels with the features of the claim 13. The plurality of the input frames comprises at least one video image and the method comprises the steps of selecting regions of the input frames with input pixels as selected regions to be mixed to the output frame, wherein each, some or at least one selected region represent a subset of its input frame and processing only the input pixels of the selected region, thereby generating processed pixels and mixing the processed pixels to the output frame.

Preferably, the method is carried out on a computer and/or the apparatus according to one of the preceding claims or as described above, especially on the video production mixer.

Further features, advantages and/or effects of the invention are disclosed by the following detailed description of preferred embodiments of the invention and the figures, in which:
- Fig. 1: a schematic overall overview of a video production mixer as a preferred embodiment of the invention;
- Fig. 2: a schematic sketch illustrating the function of the video production mixer in figure 1;
- Fig. 3: a block diagram of a possible architecture of the video production mixer in figure 1.

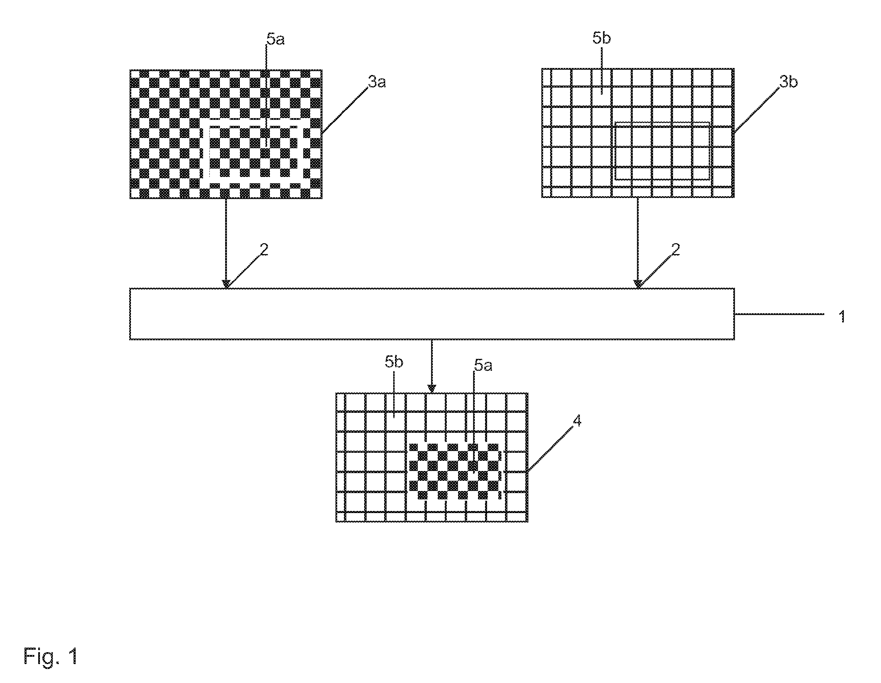

Fig. 1 shows a schematic overall view of a video production mixer 1, which is adapted for real-time or live video processing. The video production mixer 1 comprises two interfaces 2 for receiving input images 3 a, b, which shall be mixed by the video production mixer 1. The input images 3 a, b are realized as video images and are provided - for example - as video signals by video cameras (not shown) or the like. Although only two interfaces 2 are illustrated more interfaces 2 are possible.

As an outcome the video production mixer 1 provides an output image 4, which results from video processing and mixing of parts of the input images 3 a, b. In figure 1 the output image 4 is created by using a part of the input image 3a as a foreground object and a part of the input image 3b as a background object. So the output image 4 comprises input pixels of a selected area 5a of the input image 3a representing the foreground object and a selected area 5b of the input image 3b representing the background object, whereby the selected areas 5 a, b are arranged side-by-side. In the special case as shown in figure 1 the selected areas 5a and 5b cover complementary areas in the input images 3a and 3b. In other cases selected areas of more than two input images can be used or the selected areas of the input images are overlapping, whereby the resulting output pixel in the output image 4 is generated by a combining operation of the overlapping pixels. The input pixels of the selected areas 5 a, b are processed prior combining as it will be explained in connection with the following figures.

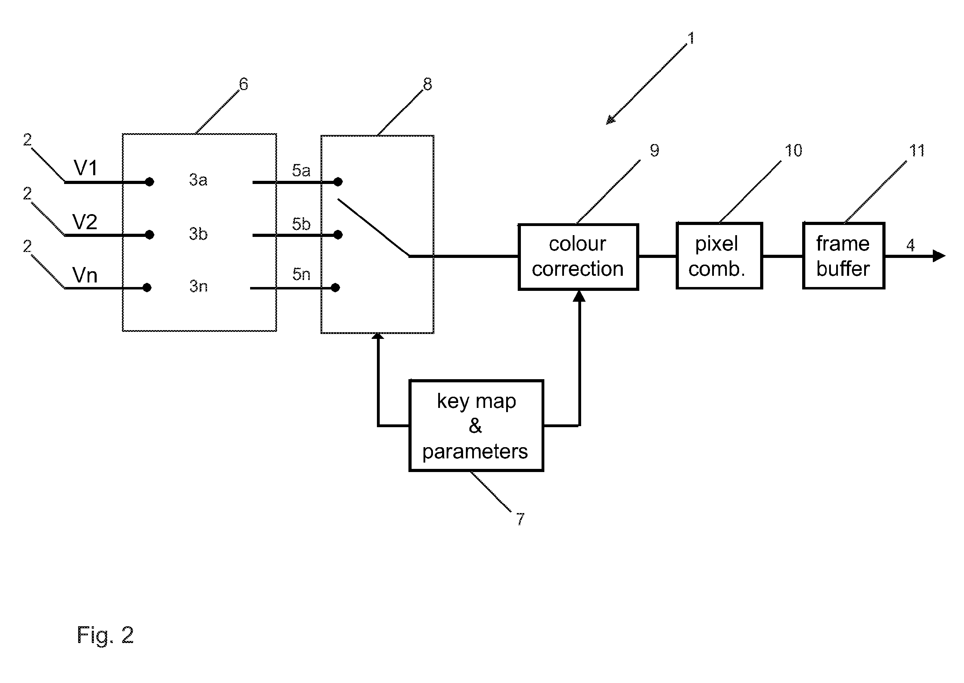

Fig. 2 shows a schematic diagram illustrating the function of the video production mixer 1 in figure 1. The video production mixer 1 comprises a frame store 6, which is connected with the interfaces 2 for receiving a plurality of video signals V1, V2, Vn and which is arranged for temporarily storing at least one input image, for example the input images 3 a, b, of each video signal V1, V2 and optional of further video signals Vn.

In order to extract the input pixels of selected regions of the input images, for example the selected regions 5a, 5b, a control unit 7 is provided to control a switch unit 8 which switches or multiplexes between the input images 3 a, b in the frame store 6, thereby extracting the requested pixels. The individual input pixels of the selected areas 5a, b of the input images 3 a, b from the video signals V1 and V2 are read from the frame store 6 and applied to a color correction unit 9 pixel-by-pixel, for example beginning from top left in a line-by-line manner in the input images 3 b. In the sample of Fig. 1 several lines of the input image 3b are readout from the frame store 6.The readout lines are applied to the color correction unit 9. The color correction unit 9 is supplied with processing parameters for correction the input pixel of the input image 3b corresponding to the video signal V2. When the pixel position at which the selected area 5a of the input image 3a of the video signal V1 is to be inserted is reached the corresponding input pixels from the selected area 5a of the input image 3a is read from the frame store 6. At the same time the processing parameters for correcting the video signal V1 are supplied to the color correction unit 9 by the control unit 7. In other words, the processing parameters for the color correction unit 9 are modified dependent upon which video source or which input image is contributing to the output video signal.

In case more than two video signals contribute to one output video signal, pixels from all video signals contributing to the corresponding pixels in the output video signal are fed to the color correction unit 9 sequentially. In this case the color correction unit 9 has to operate faster than real-time. For example, if three input video signals are combined into one output video signal the color correction unit 9 has to operate at three times real-time speed. The respective color-corrected input pixels are combined into one output pixel after all of them have undergone color correction by a pixel combiner unit 10. For this purpose the color-corrected input pixels need to be stored until the last pixel that contributes to the output pixel has been color-corrected. However, since not all pixels in the output image may be combined from all input video signals, the processing may not necessarily operate at a speed multiplier equaling the number of video sources. Rather, when the processor operates at a higher speed and only has to process a single video source, processing a single video source would be finished before the field/frame period has expired. In this case time is spared which could be used for processing another video source using the same processor. The process is referred to as "spatial division multiplexing".

The input pixels of the selected areas 5 a, b processed by the color correction unit 10 are collected as output pixels in a frame buffer unit 11. As soon as all output pixels of a present output image 4 are delivered to the frame buffer unit 11 the output image 4 is released.

As a bonus character generation and other graphic effects could be integrated to the video production mixer 1, for example by defining virtual interfaces of the frame store 6, so that graphic or character images can be provided as further input images. These further input images may be processed in the same manner as the input images 3 a, b of video sources.

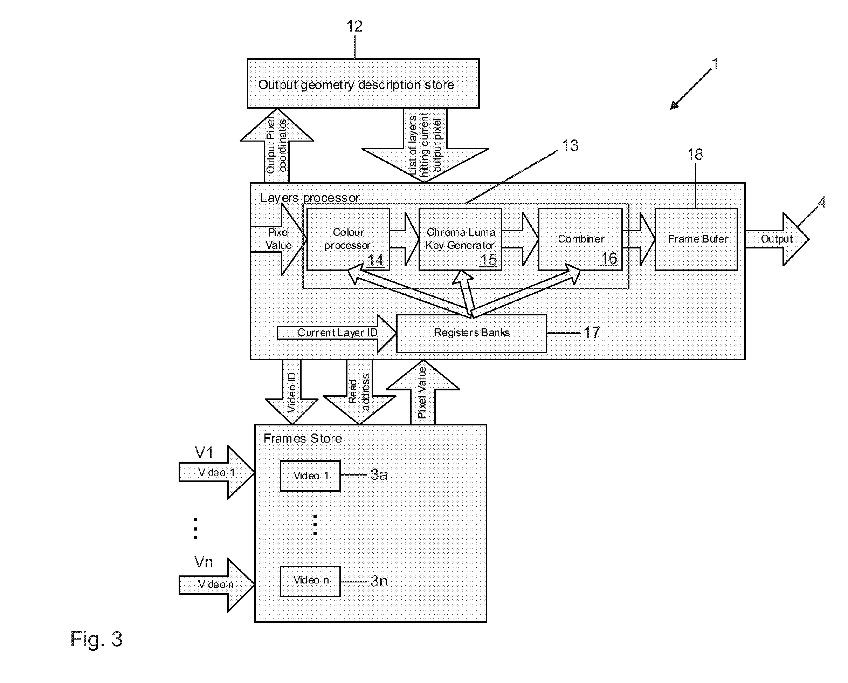

Fig. 3 shows a possible architecture of the video production mixer 1 in the preceding figures. The video production mixer 1 comprises a plurality of input interfaces 2 for receiving video signals V1 to Vn. Input image 3a to 3n resulting from the video signals V1 to Vn, respectively are held in the frame store 6 and, more specifically, input images 3a to 3n referring to one common output image 4 are held in the frame store 6 at the same time. The input image 3 a to 3 n will also be referred to as image layers 3 a to 3 n in the following.

An output geometry description module 12 is arranged to receive output pixels coordinates of the output frame 4 as input information and to return a list of image layers hitting the current output pixel. On basis of the returned data, which include in this example a video ID and a readout address, pixel values of input pixels which are relevant for the current output pixel are retrieved from the frame store 6. The pixel values are fed to a processing unit 13 in a sequential order whereby the processing unit 13 comprises subunits for color processing 14, chroma luma key generator 15 and a combiner unit 16. The processing unit 13 thus corresponds to the combination of the color correction unit 9 and the pixel combiner unit 10 in figure 2.

The color processor subunit 14 is adapted to perform - for example - a gamma correction of the input pixel values. The combiner subunit 16 is adapted to combine a plurality of processed input pixel values to a common output pixel value in case more than one input pixel contributes to an output pixel.

The processing parameters for processing the input pixel values in the processing unit 13 are provided by a data distribution unit 117 which receives the current image layer or video ID of the input pixel to be processed and returns processing parameters selectively for the different image layers or video IDs. As a consequence each input pixel value is processed by specific processing parameters referring to the different video signals, input images or layers, whereby the processing parameters may differ between the various video signals, images or layers, respectively.

After processing the input pixel values the processed output pixels are collected in a frame buffer 18, corresponding to the frame buffer unit 11 in figure 2, and combined to the output image 4.

As the operation mode of the video production mixer 1 is characterized by a sequentially processing of the input pixel values only one hardware instance or processing unit is needed. In case more than one input pixel contributes to an output pixel the processing speed of the hardware layer must be faster than real-time. But as not every output pixel is normally created by using each input pixel of the various video signals, the operational speed of the hardware layer may be smaller than it would be needed to process the number of video signals multiplied with the number of input pixels of each video image.

## Claims

1. Apparatus (1) for video processing, wherein a plurality of input frames (3a,b) with input pixels is combined to an output frame (4) with output pixels, wherein the plurality of input frames (3 a, b) comprises at least one video image,
the apparatus (1) comprising:
a selecting module (8, 12) for selecting regions of the input frames (3a,b) with input pixels as selected regions (5a,b) to be combined to the output frame (4), wherein at least one, some or each selected region (5a,b) represents a subset of its input frame (3a, b),
a processing module (9, 10, 13) arranged for processing at least a subset of the input pixels thereby generating processed pixels,
a combining module (18) for combining the processed pixels to the output frame (4)
**characterized in**
**that** the processing module (8, 12) is arranged for processing only the input pixels of the selected regions (5a, b) and for processing the input pixels of at least two different input frames (3a, b) in a serial order.

2. Apparatus (1) according to claim 1, **characterized in that** the selecting module (8, 12) is arranged as a spatial multiplexing unit.

3. Apparatus (1) according to claim 1 or 2, **characterized in that** each selected regions (5a, b) comprises only one single input pixel.

4. Apparatus (1) according to one of the preceding claims, **characterized in that** all of the input pixels corresponding to the output pixels of one of the output frames are processed in a sequential order.

5. Apparatus (1) according to one of the preceding claims, **characterized in that** the processing module (9, 10, 13) is realized as a single hardware instance responsible for all input pixels of the selected regions.

6. Apparatus (1) according to one of the preceding claims, **characterized in that** processing module (9, 10, 13) comprises means for one, for a subset or for all of the following tasks: Color processing, color correcting, chroma key generating, luma key generating, gamma correction.

7. Apparatus (1) according to one of the preceding claims **characterized by** an output geometry description module (7, 12) arranged for receiving position data of one of the output pixels to be mixed and detecting and/or returning layer data identifying the input frames (3a, b) comprising the selected regions (5a, b) for the respective output pixel and/or the position of the said selected regions (5a, b).

8. Apparatus (1) according to one of the preceding claims **characterized by** a frame store module (6) for holding the input frames (3a, b).

9. Apparatus (1) according to one of the preceding claims **characterized by** a data distribution module (7, 17) arranged to provide the processing module (9, 10, 13) with selective processing parameters in dependence on the position and/or on the layer data and/or on the input frame of the selected region (3a, b) and/or input pixel to be processed.

10. Apparatus (1) according to one of the preceding claims **characterized in that** the plurality of the input frames (3a, b) comprises at least one graphic and/or character frame.

11. Apparatus (1) according to one of the preceding claims **characterized in** being realized as a video production mixer.

12. Method for mixing a plurality of input frames (3a, b) with input pixels to an output frame (4) with output pixels, wherein the plurality of the input frames (3a,b) comprises at least one video image, the method comprising the steps:
selecting regions of the input frames with input pixels as selected regions (5a,b) to be combined to the output frame (4), wherein each, some or at least one selected region (5a, b) represents a subset of its input frame (3a, b),
processing only the input pixels of the selected regions (5a, b), thereby generating processed pixels,
combining the processed pixels to the output frame.

13. Method according to claim 12, wherein the method is carried out on a computer and/or the apparatus according to one of the preceding claims.

14. Method according to one of the claims 12 or 13, wherein the delay between the input of the input frames and the output of the output frame is two frames.

15. Method according to one of the claims 12 to 14 **characterized in that** the processing step is carried out on a per pixel basis in a sequential manner.
